# EUROPÄISCHE PATENTSCHRIFT

(11) **EP 3 642 086 B1**
(45) Veröffentlichungstag und Bekanntmachung des Hinweises auf die Patenterteilung: **07.06.2023**
(21) Anmeldenummer: 18721320.2
(22) Anmeldetag: 24.04.2018
(51) Int. Cl.: B60T 8/17, B60T 8/1766

(54) **VERFAHREN ZUR BESTIMMUNG DER DURCH BETÄTIGUNG VON RADBREMSEN ERREICHBAREN GESAMTVERZÖGERUNGSWERTEN EINES NUTZFAHRZEUGS, BREMSANLAGE ZUR DURCHFÜHRUNG DES VERFAHRENS SOWIE NUTZFAHZEUG DAMIT**
METHOD FOR DETERMINING THE OVERALL UTILITY VEHICLE DECELERATION VALUES WHICH CAN BE ACHIEVED BY ACTUATING WHEEL BRAKES, BRAKE SYSTEM FOR CARRYING OUT THE METHOD, AND UTILITY VEHICLE COMPRISING SAME
PROCÉDÉ DESTINÉ À DÉTERMINER LES VALEURS DE DÉCÉLÉRATION TOTALE ATTEIGNABLES PAR ACTIONNEMENT DE FREINS DE ROUE D'UN VÉHICULE UTILITAIRE, SYSTÈME DE FREINAGE DESTINÉ À LA MISE EN OEUVRE DU PROCÉDÉ ET VÉHICULE UTILITAIRE COMPRENANT CE DERNIER

(30) Priorität: 20.06.2017 DE 102017005816
(43) Veröffentlichungstag der Anmeldung: 29.04.2020
(73) Patentinhaber: ZF CV Systems Europe BV, 1170 Brussels (BE)
(72) Erfinder: DIECKMANN, Thomas, 30982 Pattensen (DE); KALLENBACH, Stephan, 30161 Hannover (DE); WALLBAUM, Torsten, 31089 Duingen (DE); WIEHEN, Christian, 30938 Burgwedel (DE)
(74) Vertreter: Rabe, Dirk-Heinrich
(86) Internationale Anmeldenummer: PCT/EP2018/060438
(87) Internationale Veröffentlichungsnummer: WO 2018/233907

(56) Entgegenhaltungen:
- WO-A1-93/12962
- DE-A1-102015 006 737
- US-A1- 2013 297 164
- US-B2- 8 573 713

## Beschreibung

Die Erfindung betrifft ein Verfahren zur Bestimmung der durch Betätigung von Radbremsen erreichbaren Gesamtverzögerungswerten zur Verzögerung eines Nutzfahrzeugs oder einer Fahrzeugkombination mit mehreren Achsen gemäß Anspruch 1. Die Erfindung betrifft außerdem gemäß Anspruch 8 eine Bremsanlage zur Durchführung des Verfahrens sowie gemäß Anspruch 9 ein Nutzfahrzeug oder eine Fahrzeugkombination mit einer solchen Bremsanlage.

Bei modernen Nutzfahrzeugen werden zunehmend automatisierte Bremssysteme eingesetzt, beispielsweise fortschrittliche Notbremssysteme (AEBS = "advanced emergency braking system"), Fahrerassistenzsysteme wie elektronische Stabilitätskontrollen (ESC), wobei die Bremsanlage über eine elektronische Bremssteuereinheit unabhängig von Fahrerbremsungen bedarfsweise automatisiert das Fahrzeug verzögert. Von besonderer Bedeutung ist dabei die möglichst genaue Kenntnis der durch Betätigung der Radbremsen erreichbaren Gesamtverzögerung des Nutzfahrzeugs. Dies gilt in besonderem Maße für das sogenannte Platooning, wobei mehrere Nutzfahrzeuge oder Fahrzeugkombinationen im Straßenverkehr mit Hilfe einer koordinierenden Steuerung mit möglichst geringem Abstand hintereinander fahren, um den Kraftstoffverbrauch zu verringern. Die Nutzfahrzeuge des Platoons sind miteinander vernetzt oder weisen Einrichtungen zur Abstandmessung wie RADAR oder LI DAR auf, welche der Einstellung möglichst geringer Abstände zum vorausfahrenden Fahrzeug dienen, ohne dass die Verkehrssicherheit beeinträchtigt wird. Die vernetzten Nutzfahrzeuge im Platoon benötigen aufgrund kurzer Reaktionszeiten der automatisierten Verzögerung einen deutlich geringeren Abstand als bei manueller Fahrzeugführung, wodurch sich der Luftwiderstand erheblich reduziert.

Um den Abstand jedoch so gering wie möglich zu halten ist eine möglichst genaue Kenntnis des minimal benötigten Sicherheitsabstands erforderlich, welcher maßgeblich von der maximal verfügbaren Bremskraft eines Nutzfahrzeugs oder einer Fahrzeugkombination im Platoon abhängt. Die erreichbare Gesamtverzögerung eines Nutzfahrzeugs oder einer Fahrzeugkombination hängen von einer Vielzahl von Faktoren ab, beispielsweise dem Beladungszustand und der von den Radbremsen erreichbaren Bremskräfte. Die jeweilige Bremskraft wird beeinflusst durch den Bremsenkennwert der Radbremsen, welcher die Abhängigkeit des von der Radbremse aufgebrachten Bremsmoments von der eingestellten Stellgröße, beispielsweise dem aufgebrachten Bremsdruck, repräsentiert. Neben diesem Bremsenkennwert haben auch konstruktiv gegebene Eigenschaften einzelner Bremsen und auch Reifen sowie die Fahrbahnreibung Einfluss auf die erreichbaren Bremskräfte.

Für die Zusammenstellung von Platoons wurde bereist vorgeschlagen, die Ausrüstung von Scheibenbremsen und/oder Trommelbremsen als Kriterium für das Verzögerungsvermögen heranzuziehen. Das ist jedoch nicht nur technisch unzutreffend, sondern auch nicht hinreichend.

DE 10 2008 061 944 A1 offenbart ein Verfahren zur Ermittlung genauer Bremsenkennwerte, welche zur Bestimmung des jeweiligen Ansprechdrucks einer Bremse herangezogen werden. Mit den Bremsenkennwerten soll der Regelungsaufwand zur Korrektur des eingesteuerten Bremsdrucks an einer jeweiligen Bremse reduziert werden. Bei dem bekannten Verfahren wird nach Erfassen einer Bremsanforderung der Bremsdruck an den Bremsen einer ersten Achse verändert, während an allen Bremsen der anderen Achsen der Bremsdruck konstant gehalten wird oder kein Bremsdruck angelegt wird. Außerdem wird ein Bewegungskennwert erfasst, welcher eine Verzögerung eines Zugfahrzeugs bzw. eines Fahrzeugzuges anzeigt. Aus dem Bewegungskennwert sowie dem Bremsdruck an den Bremsen der ersten Achse wird ein Bremsenkennwert berechnet, gegebenenfalls unter Berücksichtigung der aktuellen Bremstemperatur.

Das Aufzeichnen von erreichten Bremskräften während der Fahrt des Nutzfahrzeugs stellt regelmäßig keine verlässlichen Informationen zur maximalen Verzögerung bereit, da hierfür die Durchführung einer Vollbremsung erforderlich wäre. Abgesehen davon könnte eine Vollbremsung im öffentlichen Straßenverkehr eine Beschädigung der Ladung verursachen oder zu einer Gefährdung des im Platoon mit kurzem Abstand nachfolgenden Fahrzeugs oder anderer Verkehrsteilnehmer führen.

Eine Messung der aktuell erreichbaren Gesamtbremskräfte könnte grundsätzlich zwar durch Bremsversuche ermittelt werden, der Aufwand zur Messung der erreichbaren Gesamtkräfte ist jedoch aufwendig und müsste häufig durchgeführt werden, beispielsweise nach jeder Änderung des Beladungszustands des Nutzfahrzeugs oder einer Fahrzeugkombination. Da dies kaum praktikabel ist, bleiben die erreichbaren Gesamtbremskräfte, insbesondere die maximal erreichbare Bremskraft eines Nutzfahrzeugs oder einer Fahrzeugkombination, unbekannt. Das Potential des Platoonings zur Reduzierung des Kraftstoffverbrauchs kann ohne verlässliche Informationen zu den erreichbaren Gesamtbremskräften nicht ausgeschöpft werden.

Die US 8,573,713 B2 offenbart ein Verfahren zur Kontrolle eines regenerativen Bremssystems. Eine Kontrolleinheit wird verwendet, um das Verhältnis nomineller Verzögerungskomponenten mehrerer Bremsen relativ zueinander zu verändern.

Die DE 10 2015 006 737 A1 offenbart Verfahren und Vorrichtungen zum elektronischen Regeln einer Fahrzeugverzögerung. Eine Fahrzeug-Ist-Verzögerung und eine Fahrzeug-Soll-Verzögerung werden verglichen, und Bremsdrücke an Radbremsen werden geregelt.

Der vorliegenden Erfindung liegt die Aufgabe zugrunde, während der Fahrt die aktuell erreichbaren Gesamtverzögerungswerte zur Verzögerung eines Nutzahrzeugs oder einer Fahrzeugkombination mit mehreren Achsen möglichst genau zu bestimmen.

Diese Aufgabe wird erfindungsgemäß durch ein Verfahren zur Bestimmung der durch Betätigung von Radbremsen erreichbaren Gesamtverzögerungswerte zur Verzögerung eines Nutzfahrzeugs oder einer Fahrzeugkombination mit mehreren Achsen mit den Merkmalen des Anspruchs 1 gelöst. Die Erfindung wird außerdem gemäß Anspruch 6 durch eine Bremsanlage zur Durchführung des Verfahrens und gemäß Anspruch 7 durch ein Nutzfahrzeug oder eine Fahrzeugkombination mit einer derartigen Bremsanlage gelöst.

Bei der erfindungsgemäßen Bestimmung der durch Betätigung von Radbremsen erreichbaren Gesamtverzögerungswerte werden bei Teilbremsungen Teilverzögerungswerte für einzelne Bremseneinheiten bestimmt, welche jeweils durch die Radbremsen mindestens einer Achse gebildet sind. Bremseneinheiten mit mehreren Achsen sind insbesondere dann sinnvoll, wenn die Radbremsen mehrerer Achsen aus einem gemeinsamen Bremskreis gespeist sind oder zur Vereinfachung der Bremskraftverteilung. Unter Teilbremsung wird dabei ein Manöver zur Verzögerung des Nutzfahrzeugs verstanden, bei dem die Größe der angeforderten Verzögerung des Nutzfahrzeugs geringer ist als die maximal erreichbare Verzögerung. Zur Umsetzung der Verzögerungsanforderung bei Teilbremsungen erfolgt gemäß der Erfindung eine Bremskraftverteilung mit ungleich auf die Bremseneinheiten verteilten Bremskräften, wobei zeitversetzt jeweils eine der beiden Bremseneinheiten ausgewählt wird und über diese ausgewählte Bremseneinheit eine größere Bremskraft aufgebracht wird, als über die anderen Bremseneinheiten. Während des Bremsvorgangs wird eine aktuelle Verzögerung des Nutzfahrzeugs oder der Fahrzeugkombination für die erfindungsgemäß bestimmte Bremskraftverteilung gemessen oder ermittelt und als entsprechender Teilverzögerungswert der jeweils ausgewählten Bremseneinheit zugeordnet und abgespeichert. Auf diese Weise steht ein minimal durch die ausgewählte Bremseneinheit erreichbare Verzögerung des Nutzfahrzeugs zur Verfügung.

Indem während der Fahrt des Nutzfahrzeugs oder der Fahrzeugkombination bei Teilbremsungen unterschiedliche Bremseneinheiten zur Umsetzung der größten Bremskraft ausgewählt werden, können während der Fahrt Teilverzögerungswerte für sämtliche Bremseneinheiten ermittelt werden. Die erreichbaren Gesamtverzögerungswerte werden als Summe der während der Fahrt bestimmten Teilverzögerungswerte der zwecks erfindungsgemäßer Bestimmung der Teilverzögerungswerte zuvor jeweils ausgewählten Bremseneinheiten bestimmt. Die jeweils für die ausgewählte Bremseneinheit gemessene Verzögerung stellt anders ausgedrückt den minimal erreichbaren Verzögerungsanteil der ausgewählten Achse an der Gesamtverzögerung dar. Zur Ermittlung des Bremsvermögens des Nutzfahrzeugs oder der Fahrzeugkombination werden die Teilverzögerungswerte sämtlicher Bremseneinheiten, das heißt die Anteile der einzelnen Bremseneinheiten an der erreichbaren Gesamtverzögerung, addiert und die Summe der Teilverzögerungswerte als Gesamtverzögerungswert bestimmt.

Vorteilhaft werden die Bremseneinheiten nacheinander zur Umsetzung der größten Bremskraft bei Teilbremsungen ausgewählt und die jeweils aktuelle Verzögerung als Teilverzögerungswert zugeordnet, so dass in kurzer Zeit repräsentative Teilverzögerungswerte für sämtliche Bremseneinheiten zur Verfügung stehen. Die Reihenfolge der Auswahl der Bremseneinheiten zur Bestimmung der jeweiligen Teilverzögerungswerte ist dabei vorgegeben oder wird in einer weiteren vorteilhaften Ausführungsform während der Fahrt anhand der bisher ermittelten Teilverzögerungswerte und der damit festgestellten Verzögerungsfähigkeiten einzelner Bremseneinheiten adaptiert. Die Teilverzögerungswerte unterschiedlicher Bremseneinheiten werden in aufeinander folgenden Teilbremsungen oder auch während der gleichen Teilbremsung bestimmt, indem zur Umsetzung einer angeforderten Verzögerung des Nutzfahrzeugs nacheinander unterschiedliche Bremseneinheiten ausgewählt und zur Umsetzung der jeweils größten Bremskraft eingesetzt werden. Anders ausgedrückt werden die Bremseneinheiten, das heißt die Achsen des Nutzfahrzeugs und eines etwaigen Anhängefahrzeugs, zeitversetzt bei aufeinanderfolgenden Teilbremsungen beaufschlagt oder nacheinander während eines hinreichend langen Bremsvorgangs.

Um während der Fahrt die maximal unter Einsatz sämtlicher Bremseneinheiten erreichbare Gesamtverzögerung des Nutzfahrzeugs oder der Fahrzeugkombination zu ermitteln, werden jeweilige maximale Teilverzögerungswerte für die einzelnen Bremseneinheiten bestimmt. Der maximale Gesamtverzögerungswert wird als Summe der maximalen Teilverzögerungswerte bestimmt. Zur Bestimmung eines maximalen Teilverzögerungswerts wird ein jeweiliger Schlupf an den Radbremsen der ausgewählten Bremseneinheit erfasst und mit einer vorgegebenen Schlupfgrenze verglichen. Bei Erreichen der Schlupfgrenze wird die aktuelle Verzögerung des Nutzfahrzeugs oder der Fahrzeugkombination als maximaler Teilverzögerungswert abgespeichert. Die vorgegebene Schlupfgrenze wird im Voraus ermittelt und bevorzugt entsprechend der Kraftschlussgrenze vorgegeben. Wird die vorgegebene Schlupfgrenze, das heißt die Kraftschlussgrenze, während der Teilbremsung an der ausgewählten Achse nicht erreicht, so wird der maximale Teilverzögerungswert vorteilhaft bestimmt, indem die aktuelle Verzögerung des Nutzfahrzeugs oder der Fahrzeugkombination entsprechend des erfassten Schlupfs gewichtet wird. Unter der Gewichtung wird dabei die Bewertung des Schlupfs als Einflussgröße verstanden. Bei der Gewichtung wird ein geringer auftretender Schlupf als großer Abstand zur Kraftschlussgrenze gewertet und die aktuelle Verzögerung mit einem entsprechenden Gewichtungsfaktor gewichtet, um einen maximalen Teilverzögerungswert für die jeweils ausgewählte Bremseneinheit zuzuordnen. Auf diese Weise wird der maximale Teilverzögerungswert entsprechend dem Abstand zur Kraftschlussgrenze anhand des tatsächlichen Radschlupfs geschätzt.

Besonders aussagefähige und genaue Teilverzögerungswerte werden erhalten, wenn zur Bestimmung von Teilverzögerungswerten nicht nur die ausgewählte Bremseneinheit zur Umsetzung der größten Teilbremskraft eingesetzt wird, sondern die zur Verzögerung angeforderte Bremskraft auf die ausgewählte Bremseneinheit konzentriert wird. Unter Konzentration wird dabei verstanden, dass die zur Verzögerung angeforderte Bremskraft während der Teilbremsung möglichst vollständig von der ausgewählten Bremseneinheit aufgebracht wird, das heißt, das Nutzfahrzeug oder die Fahrzeugkombination wird mit Einzelachsbremsung während der Teilbremsung verzögert.

Um sicher zu stellen, dass während der Ermittlung von Teilverzögerungswerten während einer Teilbremsung bedarfsweise möglichst rasch die Gesamtbremskraft erhöht werden kann, werden während der Konzentration der Bremskraftverteilung auf die ausgewählte Bremseneinheit die weiteren Bremseneinheiten mit Ansprechkraft betätigt.

In der bevorzugten Ausführungsform der Erfindung werden die Radbremsen pneumatisch oder hydraulisch betätigt, wobei der Bremsdruck die Stellgröße zur Aufbringung der Bremskraft an der jeweiligen Radbremse ist. Mit einer hydraulischen Betätigung der Radbremsen lassen sich mit hoher Stellgenauigkeit hohe Bremsmomente und Bremskräfte einstellen. In einer weiteren vorteilhaften Ausführungsform sind elektromagnetische Radbremsen vorgesehen. In der bevorzugten Ausführungsform werden die Radbremsen über ein pneumatisches Betätigungssystem in Betrieb genommen, wobei leistungsloses Druckhalten bei konstanter Kraft möglich ist und kleinere Leckagen keine Umweltbelastungen verursachen. Ferner sind pneumatische Bremssysteme vergleichsweise einfach aufgebaut und zudem in der Regel kostengünstiger als vergleichbare elektromechanische Bremssysteme.

Die aktuelle Verzögerung, welche zur Bestimmung der Teilverzögerungswerte für die einzelnen Bremseneinheiten herangezogen wird, wird aus Messwerten ermittelt, beispielsweise aus den Messwerten eines Beschleunigungssensors. Der Beschleunigungssensor ist dabei der Bremssteuereinheit derart zugeordnet, dass die Bremssteuereinheit Zugriff auf die Messwerte des Beschleunigungssensors hat oder bereits ausgewertete Informationen zur aktuellen Verzögerung empfängt. In einer weiteren Ausführungsform der Erfindung werden Messwerte des Beschleunigungssensors eines Sensormoduls für die Stabilitätsregelung des Fahrzeugs herangezogen.

Die Erfindung wird besonders vorteilhaft bei Nutzfahrzeugen oder Fahrzeugkombinationen verwendet. Unter einem Nutzfahrzeug wird dabei ein Kraftfahrzeug verstanden, welches nach seiner Bauart für den Transport von Gütern (beispielsweise Lastkraftwagen, Zugfahrzeuge und dergleichen), oder den Transport von Personen (beispielsweise Omnibusse) oder zum Ziehen von Anhängern bestimmt ist. Eine Fahrzeugkombination umfasst ein motorisiertes Zugfahrzeug und wenigstens ein Anhängefahrzeug.

Unter Berücksichtigung der erfindungsgemäß ermittelten Gesamtverzögerungswerte wird ein Abstand eines Nutzfahrzeugs oder einer Fahrzeugkombination zu einem vorausfahrenden Fahrzeug bestimmt. Dieser Abstand ist dabei wenigstens der Mindestabstand, innerhalb dessen das Nutzfahrzeug oder die Fahrzeugkombination mit ihrem individuellen Verzögerungsvermögen entsprechend den Gesamtverzögerungswerten noch ein Auffahren auf das vorausfahrende Fahrzeug vermeiden kann. Die Bestimmung des Abstands über die erfindungsgemäß während der Fahrt ermittelten Gesamtverzögerungswerte erlaubt insbesondere beim Platooning eine optimale Einstellung eines möglichst geringen Folgeabstand der im Platoon fahrenden Fahrzeuge.

Ausführungsbeispiele der Erfindung sind nachstehend anhand der Zeichnung näher erläutert. Es zeigen:
- Fig. 1: ein pneumatisches und elektrisches Schema einer Bremsanlage eines Nutzfahrzeugs,
- Fig. 2: eine schematische Ansicht eines zweiten Ausführungsbeispiels mit hydraulischem Betätigungssystem,
- Fig.3: eine schematische Ansicht eines drittes Ausführungsbeispiels mit elektromechanischem Betätigungssystem,
- Fig. 4: eine schematische Darstellung der Verzögerung und der Bremskräfte an einer Fahrzeugkombination mit mehreren Achsen,
- Fig. 5: ein Flussschaubild eines Ausführungsbeispiels eines Verfahrens zur Bestimmung der Gesamtverzögerungswerte eines Nutzfahrzeugs oder einer Fahrzeugkombination mit dem Ausführungsbeispiel vier Achsen.

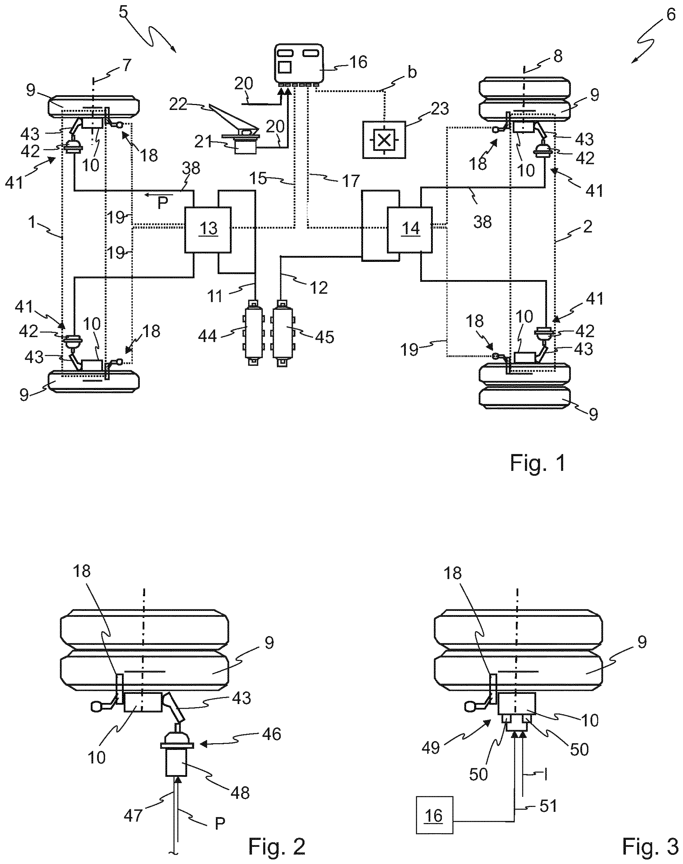

Fig. 1 zeigt eine elektrisch-pneumatisches Schema einer elektronischen Bremsanlage 5 eines Nutzfahrzeugs 6. Elektrische Leitungen sind mit punktierten Linien und pneumatische Leitungen mit Volllinien dargestellt. Das Nutzfahrzeug 6 umfasst im gezeigten Ausführungsbeispiel zwei Achsen 7, 8, an denen jeweils beidseitig Räder 9 angeordnet sind. Zur Verzögerung (Abbremsen) des Nutzfahrzeugs 6 ist jedem Rad 9 eine Radbremse 10 zugeordnet. Im Ausführungsbeispiel gemäß Fig. 1 weist die Bremsanlage 5 ein pneumatisches Betätigungssystem 41 auf, so dass die Radbremsen 10 pneumatisch betätigbar sind und entsprechend dem anliegenden Bremsdruck eine Bremskraft auf das sich drehende Rad 9 ausüben. Das pneumatische Betätigungssystem 41 besteht aus einem mit der Radbremse 10 verbundenen pneumatischen Bremszylinder 42 sowie dem Bremshebel 43 und einem Druckkolben, welcher im Inneren der Radbremse 10 angeordnet ist. Der Bremszylinder 42 erzeugt unter der Wirkung des über die Steuerleitung 38 anliegenden Stellgröße, nämlich dem Bremsdruck P, eine Betätigungskraft. Der Bremshebel 43 dient der Übertragung und Verstärkung der vom Bremszylinder 42 erzeugten Betätigungskraft.

Die Bremsanlage 5 weist im gezeigten Ausführungsbeispiel zwei Bremskreise auf, wobei ein erster Bremskreis 11 der in Fahrtrichtung vorn liegenden Achse 7 zugeordnet ist und ein zweiter Bremskreis 12 der hinteren Achse 8 zugeordnet ist. Zur pneumatischen Betätigung der Radbremsen 10 ist im ersten Bremskreis 11 ein erster Druckmittelvorrat 44 und im zweiten Bremskreis 12 ein zweiter Druckmittelvorrat 45 angeordnet. Zu den Bremskreisen 11, 12 gehören die jeweiligen Steuerleitungen 38 der Radbremsen 10, über welche die Radbremsen 10 in Betrieb genommen werden, also im gezeigten Ausführungsbeispiel mit pneumatischen Radbremsen 10 Bremsdruck angelegt wird. Zur Einstellung des Bremsdrucks an den Radbremsen 10 ist im gezeigten Ausführungsbeispiel in beiden Bremskreisen 11, 12 jeweils ein Achsmodulator 13, 14 zugeordnet. Ein vorderer Achsmodulator 13 ist dabei über eine Signalleitung 15 mit einer Bremssteuereinheit 16 verbunden. Die Signalleitung 15 ist insbesondere CAN-Verbindung. Der Achsmodulator 14 ist über eine Signalleitung 17 (CAN-Bus) mit der Bremssteuereinheit 16 verbunden.

An den Rädern 9 sind jeweils Drehzahlsensoren 18 angeordnet. Die Drehzahlsensoren 18 der Räder 9 der vorderen Achse 7 sind über eine elektrische Leitung 19 signalübertragend mit dem vorderen Achsmodulator 13 verbunden. Entsprechend sind die Drehzahlsensoren 18 der Räder 9 der hinteren Achse 8 mit dem hinteren Achsmodulator 14 verbunden. Im Betrieb der Bremsanlagen 5 erfassen die Achsmodulatoren 13, 14 die Messwerte für die Drehzahlen der jeweiligen Räder 9 und senden sie gegebenenfalls nach Auswertung durch eine Elektronik an die Bremssteuereinheit 16. Die Bremssteuereinheit 16 wertet die ermittelten Drehzahlen aus und passt gegebenenfalls die Bremskraft, das heißt im Ausführungsbeispiel mit pneumatischen Radbremsen den Bremsdruck, an, welcher dem jeweiligen Achsmodulator 13, 14 vorgegeben wird. Die Drehzahlmesswerte wären beispielsweise zur Realisierung einer Antiblockierfunktion herangezogen oder andere Stabilitätsfunktionen eines elektronischen Bremssystems. Bei der Auswertung der Drehzahlen schließt die Bremssteuereinheit 16 auf den jeweiligen Radschlupf und die Blockierneigung des jeweiligen Rades 9. Übersteigt die dem anliegenden Bremsdruck entsprechende Bremskraft die maximal übertragbare Bremskraft an einem oder mehreren Rädern 9 beginnen diese zu blockieren, wodurch das Nutzfahrzeug 6 instabil werden kann. Über die Drehzahlsensoren 18 überwacht demnach die Antiblockierfunktion der Bremssteuereinheit 16 die Blockierneigung jedes Rades 9.

Die Bremssteuereinheit 16 ermittelt die Bremskraft und/oder den dazugehörigen Bremsdruck für die jeweiligen Radbremsen 10, entsprechend einer Verzögerungsanforderung 20. Die Bremssteuereinheit 16 ist dazu ausgebildet, externe Verzögerungsanforderungen 20 zu empfangen, beispielsweise von Fahrerassistenzsystemen. Insbesondere beim Platooning, wenn mehrere Nutzfahrzeuge oder Fahrzeugkombinationen miteinander vernetzt sind, empfängt die Bremssteuereinheit 16 derartige Bremsanforderungen 20 zur automatisierten Verzögerung. Bei einem Zugfahrzeug ist außerdem ein Bremssignalgeber 21 vorgesehen, über den der Fahrer des Zugfahrzeugs eine Verzögerungsanforderung 20 an die Bremssteuereinheit 16 stellen kann. An den Bremssignalgeber 21 ist ein vom Fahrer betätigbares Bremspedal 22 gekoppelt, welches in der Fahrerkabine des Nutzfahrzeugs angeordnet ist.

Ein zweites Ausführungsbeispiel einer Bremsanlage weist ein hydraulisches Betätigungssystem 46 für die Radbremsen auf, welches prinzipiell in Fig. 2 gezeigt ist. Dabei wird ein Bremsdruck P über eine als Hydraulikleitung 47 ausgebildete Steuerleitung auf einen Hydraulikzylinder 48 geschaltet, welcher hydraulisch eine dem Bremsdruck P entsprechende Betätigungskraft erzeugt.

In einem dritten Ausführungsbeispiel einer Bremsanlage gemäß Fig. 3 ist ein elektromechanisches Betätigungssystem 49 vorgesehen. Das Betätigungssystem 49 umfasst einen oder mehrere elektromechanische Aktoren 50, welche den Bremskolben eines Bremszylinders ersetzen. Die Bremsbeläge werden von den Aktoren 50 entsprechend der über die elektrische Steuerleitung 51 anliegenden elektrischen Stellgröße I angepresst, nämlich bei der Scheibenbremse an die Bremsscheibe gepresst. Die Stellgröße I wird von der Bremssteuereinheit 16 analog der Bestimmung des Bremsdrucks als Stellgröße bei pneumatischer Betätigung im Ausführungsbeispiel gemäß Fig. 1 ermittelt.

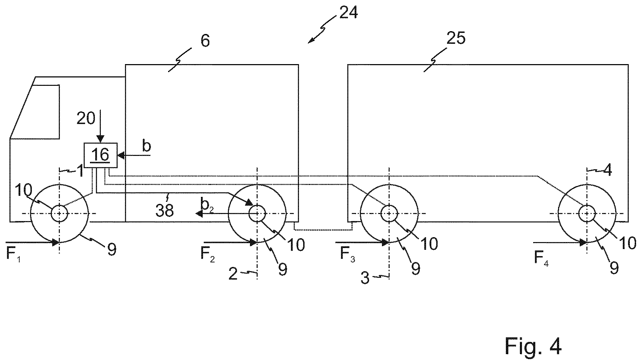

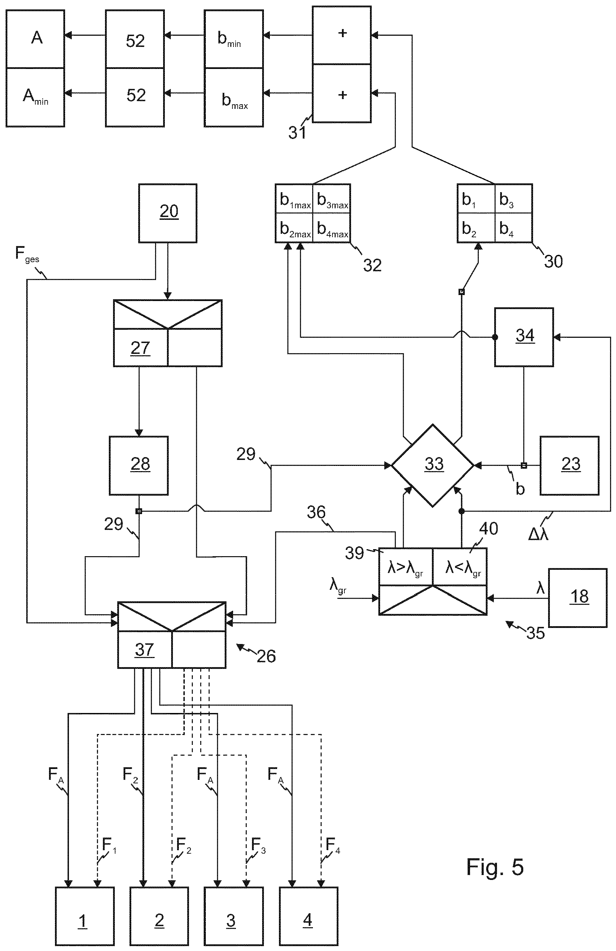

Um beim Platooning den Abstand zum vorausfahrenden Fahrzeug so gering wie möglich zu halten, wird während der Fahrt des Nutzfahrzeugs 6 oder der Fahrzeugkombination die erreichbare Gesamtverzögerung bestimmt und der automatisierten Verzögerung zugrunde gelegt. Wie nachstehend noch näher anhand von Fig. 4 und Fig. 5 erläutert ist, erfolgt zur Umsetzung einer Verzögerungsanforderung 20 bei Teilbremsungen eine Bremskraftverteilung mit ungleich auf Bremseneinheiten 1, 2 einer oder mehrerer Achsen 7, 8 verteilten Bremskräften. Im Ausführungsbeispiel gemäß Fig. 1 bilden die Radbremsen 10 der Vorderachse 7 eine derartige Bremseneinheit 1, während die Bremseneinheit 2 die Radbremsen 10 der hinteren Achse 8 umfassen. Zur Bestimmung von Teilverzögerungswerten für einzelne Bremseneinheiten 1, 2 wird die aktuelle Verzögerung b des Nutzfahrzeugs 6 (oder der Fahrzeugkombination 24 in Fig. 4) herangezogen. Zur Bestimmung der aktuellen Verzögerung b ist der Bremssteuereinheit 16 ein Beschleunigungssensor 23 zugeordnet. In einem alternativen Ausführungsbeispiel bestimmt die Bremssteuereinheit 16 die aktuelle Verzögerung b aus den Drehzahlmesswerten der Drehzahlsensoren 18.

In Fig. 4 ist eine Fahrzeugkombination 24 dargestellt, welche aus einem Nutzfahrzeug 6 mit einer ersten Bremseneinheit1 und einer zweiten Bremseneinheit2 sowie einem Anhängefahrzeug 25 mit einer dritten Bremseneinheiten 3 und einer vierten Bremseneinheit4 besteht. Jede Bremseneinheit 1, 2, 3, 4 umfasst jeweils die Radbremsen 10 einer Achse des Nutzfahrzeugs 6 beziehungsweise des Anhängefahrzeugs 25.

Die Betätigung der Radbremsen 10 wird von der Steuereinheit 16 gesteuert, so dass jede Bremseneinheit 1, 2, 3, 4 in Abhängigkeit der Ansteuerung durch die Bremssteuereinheit 16 eine jeweilige Bremskraft F₁, F₂, F₃, F₄ erzeugt.

Die Bremssteuereinheit 16 ist dazu ausgebildet, entsprechend der Verzögerungsanforderung 20 und der zur Umsetzung dieser Verzögerungsanforderung erforderlichen Gesamtbremskraft F_{Ges} eine Verteilung der Bremskräfte F₁, F₂, F₃, F₄ auf die Bremseneinheiten 1, 2, 3, 4 vorzunehmen. Die Bremskraftverteilung 26 ist nachstehend anhand des Flussschaubildes in Fig. 5 näher erläutert.

Liegt eine Teilbremsung 27 vor, was anhand der Verzögerungsanforderung 20 auf der Grundlage einer entsprechenden Vorgabe oder einem Vergleich der angeforderten Gesamtbremskraft F_{Ges} mit bereit stehenden Gesamtverzögerungswerten festgestellt wird, so wird eine der zur Verfügung stehenden Bremseneinheiten 1, 2, 3, 4 ausgewählt, um über diese Bremseneinheit die größte Bremskraft zu übertragen. In Fig. 4 ist beispielhaft die Auswahl 28 der zweiten Bremseneinheit 2 durch eine als Volllinie dargestellte Steuerleitung 38 gezeigt. Die ausgewählte Bremseneinheit 29 wird bei der Bremskraftverteilung 26 insoweit berücksichtigt, dass über diese ausgewählte Bremseneinheit 27 eine größere Bremskraft aufgebracht wird als über die anderen Bremseneinheiten. Das heißt in der Fahrsituation gemäß Fig. 4, dass über die Bremseneinheit 2 eine größere Bremskraft F₂ übertragen wird als über die übrigen Bremseneinheiten 1, 3, 4.

Die Aufbringung der Gesamtbremskraft F_{Ges} wird auf die ausgewählte Bremseneinheit 29 vorzugsweise derart konzentriert, dass die Gesamtbremskraft F_{Ges} vollständig oder wenigstens ganz überwiegend von der ausgewählten Bremseneinheit 29 aufgebracht wird. Bei der Konzentration 37 der angeforderten Gesamtbremskraft F_{Ges} auf eine ausgewählte Bremseneinheit 29 wird - im Beispiel gem. Fig. 5 mit Auswahl 28 der zweiten Bremseneinheit 2 - eine der Gesamtbremskraft F_{Ges} entsprechende Bremskraft F₂ aufgebracht, während die weiteren Bremseneinheiten 1, 3, 4 nicht betätigt werden oder mit Ansprechkraft F_{A} betätigt werden. In dem bevorzugten Ausführungsbeispiel mit pneumatischen Radbremsen werden die Radbremsen der übrigen, das heißt nicht ausgewählten Bremseneinheiten 1, 3, 4 mit Ansprechdruck betrieben, so dass bei Bedarf eine rasche Bremswirkung durch Erhöhung der Bremskräfte an diesen übrigen Bremseneinheiten 1, 3, 4 möglich ist.

Während der Fahrt wird die aktuelle Verzögerung b der Fahrzeugkombination 24 das heißt der gemeinsamen Verzögerung aller Fahrzeuge der Fahrzeugkombination 24, über den Beschleunigungssensor 23 (Fig. 1, Fig. 4) bestimmt und der Wert der so bestimmten Verzögerung b als Teilverzögerungswert b₂ der ausgewählten Bremseneinheit 29 zugeordnet. Im gezeigten Ausführungsbeispiel der Auswahl 28 der zweiten Bremseneinheit 2 wird dieser Bremseneinheit 2 die aktuelle Verzögerung b als Teilverzögerungswert b₂ zugeordnet. Die Bremseneinheiten 1, 2, 3, 4 werden nacheinander zur Umsetzung der größten Bremskraft bei Teilbremsungen 27 ausgewählt und ihnen jeweils ein Teilverzögerungswert b₁, b₂, b₃, b₄ entsprechend der jeweils vorliegenden aktuellen Verzögerung b zugeordnet. Bei der Zuordnung 33 wird somit jeweils die ausgewählte Bremseneinheit 29 und die aktuelle Verzögerung b berücksichtigt, so dass bei den nacheinander folgenden Zuordnungsvorgängen bei Teilbremsungen 27 der ersten Bremseneinheit 1 ein Teilverzögerungswert b₁, der zweiten Bremseneinheit 2 ein Teilverzögerungswert b₂, der dritten Bremseneinheit 3 ein Teilverzögerungswert b₃ und der vierten Bremseneinheit 4 ein Teilverzögerungswert b₄ zugeordnet wird. Die Ermittlung der Teilverzögerungswerte b₁, b₂, b₃, b₄ erfolgt nacheinander und bei hinreichend langer Dauer einer Teilbremsung innerhalb derselben Teilbremsung. Die Teilverzögerungswerte b₁, b₂, b₃, b₄ repräsentieren somit das minimale Verzögerungsvermögen, welches über die jeweilige Bremseneinheit 1, 2, 3, 4 zur Verfügung steht. Die Teilverzögerungswerte b₁, b₂, b₃, b₄ werden in einer ersten Wertetabelle 30 abgespeichert und während der Fahrt laufend aktualisiert.

Ein minimaler Gesamtverzögerungswert bₘᵢₙ wird als Summe 31 der Teilverzögerungswerte b₁, b₂, b₃, b₄ bestimmt. Der minimale Gesamtverzögerungswert bₘᵢₙ repräsentiert das wenigstens erreichbare Verzögerungsvermögen der gesamten Fahrzeugkombination 24.

Ein maximaler Teilverzögerungswert b₁ₘₐₓ, b₂ₘₐₓ, b₃ₘₐₓ, b₄ₘₐₓ wird bestimmt indem ein jeweiliger Radschlupf λ an den Radbremsen 10 der ausgewählten Bremseneinheit 29 erfasst und mit einer vorgegebenen Radschlupfgrenze λ_{Gr} verglichen wird (Vergleich 35). Die Radschlupfgrenze λ_{Gr}wird entsprechend der Kraftschlussgrenze vorgegeben. Der Radschlupf λ steht über die Auswertung der Drehzahlmesswerte der Drehzahlsensoren 18 (Fig. 1) zur Verfügung. Bei Erreichen oder Überschreiten 39 der Radschlupfgrenze λ_{cr} wird die zu diesem Zeitpunkt gemessene aktuelle Verzögerung b als maximaler Teilverzögerungswert b₁ₘₐₓ, b₂ₘₐₓ, b₃ₘₐₓ, b₄ₘₐₓ in einer zweiten Wertetabelle 32 für die maximalen Teilverzögerungswerte abgespeichert. Die maximalen Teilverzögerungswerte, welche im Bereich der Kraftschlussgrenze ermittelt werden, repräsentieren die maximal erreichbare Teilverzögerung durch die jeweils ausgewählte Bremseneinheit. Wird, wie in der Darstellung in Fig. 5 gezeigt, die zweite Bremseneinheit 2 als ausgewählte Bremseneinheit 29 bestimmt, so wird für diese zweite Bremseneinheit analog zur Vorgehensweise bei der Bestimmung der minimalen Teilverzögerungswerte b₁, b₂, b₃, b₄ die aktuelle Verzögerung b als maximaler Teilverzögerungswert b₂ₘₐₓ für die zweite Bremseneinheit 2 abgespeichert. Durch Bildung der Summe 31 der maximalen Teilverzögerungswerte b₁ₘₐₓ, b₂ₘₐₓ, b₃ₘₐₓ, b₄ₘₐₓ wird ein maximaler Gesamtverzögerungswert bₘₐₓ für die gesamte Fahrzeugkombination 24 bestimmt. Auf diese Weise stehen ein minimaler Gesamtverzögerungswert bₘᵢₙ und ein maximal erreichbarer Gesamtverzögerungswert bₘₐₓ als Information zur Verfügung, welche bei der Steuerung des Folgeabstands im Rahmen des Platoonings herangezogen wird.

Ergibt sich beim Vergleich 35 des erfassten Radschlupfs λ mit der vorgegebenen Radschlupfgrenze λ_{Gr}, dass der Radschlupf λ die Radschlupfgrenze λ_{Gr} überschreitet (Überschreiten 39), so wird die Bestimmung der Teilverzögerungswerte für die ausgewählte Bremseneinheit 29 abgebrochen und es erfolgt eine Bremskraftverteilung 26 mit wenigstens einer weiteren der bis dahin nicht wirksamen Bremseneinheiten 1, 3, 4. In diesem Fall wird anhand des Vergleichs 35 ein Zubremssignal 36 erzeugt, so dass bei der Bremskraftverteilung 26 ein Zubremsen, das heißt eine zusätzliche Betätigung wenigstens einer der der bis dahin nicht betätigten Bremseneinheiten 1, 3, 4 erfolgt. Bei entsprechend hohem Verzögerungsbedarf wird die erhöhte Bremskraft durch sämtliche zur Verfügung stehenden Bremssteuereinheiten 1, 2, 3, 4 aufgebracht. Diese Bremskraftverteilung 26 ist in der Darstellung der Fig. 5 mit Strichlinien dargestellt, wobei über jede der Bremseneinheiten 1, 2, 3, 4 eine jeweilige Bremskraft F₁, F₂, F₃, F₄ aufgebracht wird.

Wird beispielsweise hoher Radschlupf λ erkannt (typischerweise im Bereich von ~10%), dann nähert sich die betreffende, das heißt die ausgewählte Bremseneinheit ihrem Maximum an übertragbaren Kräften. Wird die zugehörige Gesamtfahrzeugverzögerung b ermittelt (abzüglich eventueller Steigungseinflüsse, nur Ansprechdruck in den anderen Achsen), wird dies als maximaler Teilverzögerungswert b₁ₘₐₓ, b₂ₘₐₓ, b₃ₘₐₓ, b₄ₘₐₓ, das heißt als maximal durch alleinige Wirkung der betreffenden Bremseneinheit erreichbare Fahrzeugverzögerung, angenommen. Wird dies für alle Achsen / Bremseinheiten wiederholt, kann die erreichbare Gesamtfahrzeugverzögerung, das heißt der maximale Gesamtverzögerungswertbₘₐₓ, aus der Summe der Einzel-Maximalverzögerungen (maximale Teilverzögerungswerte b₁ₘₐₓ, b₂ₘₐₓ, b₃ₘₐₓ, b₄ₘₐₓ) gut angenähert werden, ohne dass jemals eine Vollbremsung der Zugkombination erforderlich gewesen wäre. (z.B. VA 0,2 g, HA 0,3g, Anhänger 0,2g = 0,7g maximale Verzögerungsfähigkeit). Im praktischen Betrieb wird bei zunehmendem Verzögerungsbedarf und Erreichen der Kraftschlußgrenze einer Achse vorzugsweise die Bremskraft zumindest einer der nicht genutzten Achsen bzw. Bremseneinheiten 1, 2, 3, 4 hinzuaddiert. Dies stellt die gewünschte Verzögerung sicher und verfälscht das Ergebnis der Ermittlung der erreichbaren Gesamtverzögerungswerte bₘᵢₙ, bₘₐₓ in keiner Weise.

Solange beim Vergleich 35 des Radschlupfs λ mit der vorgegebenen Radschlupfgrenze λ_{Gr} Radschlupf unterhalb der Radschlupfgrenze festgestellt wird, erfolgt die Bestimmung des maximalen Teilverzögerungswerts b₁ₘₐₓ, b₂ₘₐₓ, b₃ₘₐₓ, b₄ₘₐₓ in einem Gewichtungspfad 40, indem die jeweils aktuelle Verzögerung b der Fahrzeugkombination 24 entsprechend des erfassten Radschlupfs λ gewichtet wird. Die Gewichtung 34 erfolgt dabei entsprechend dem Abstand des erfassten Radschlupfs λ zur Radschlupfgrenze λ_{Gr}, also in Abhängigkeit der Schlupfdifferenz Δ_{λ} des Radschlupfs λ von der Radschlupfgrenze λ_{Gr}. Dabei wird ein geringer auftretender Radschlupf λ als großer Abstand zur Kraftschlussgrenze, das heißt der vorgegebenen Radschlupfgrenze λ_{Gr}, mithin großer Schlupfdifferenz Δ_{λ} , bewertet. Auf diese Weise lässt sich unter Einsatz entsprechender Algorithmen eine verbesserte Schätzung des maximalen Teilverzögerungswerts für die jeweils ausgewählte Bremseneinheit 29 schätzen. Bei einem Erreichen oder Überschreiten 39 der Radschlupfgrenze wird der maximale Teilverzögerungswert b₁ₘₐₓ, b₂ₘₐₓ, b₃ₘₐₓ, b₄ₘₐₓ in der Wertetabelle 32 durch die aktuelle Verzögerung b zu diesem Zeitpunkt aktualisiert. Für den Fall, dass während der Teilbremsung über eine ausgewählte Bremseneinheit keine Situation erreicht wird, in welcher der Radschlupf λ die vorgegebene Radschlupfgrenze λ_{Gr} erreicht, wird ein maximaler Teilverzögerungswert b₁ₘₐₓ, b₂ₘₐₓ, b₃ₘₐₓ, b₄ₘₐₓ jedenfalls über den Gewichtungspfad 40 geschätzt.

Unter Berücksichtigung der Gesamtverzögerungswerte bₘₐₓ, bₘᵢₙ erfolgt eine Bestimmung 52 von vorgesehenen Abständen A, Aₘᵢₙ des Nutzfahrzeugs 6 oder einer Fahrzeugkombination 24 zu einem vorausfahrenden Fahrzeug. Diese Abstände A, Aₘᵢₙ sind Entfernungsangaben, welche von der Bremssteuereinheit 16 des jeweiligen Nutzfahrzeugs 6 umgesetzt werden. Aus dem maximalen Gesamtverzögerungswert bₘₐₓ, welche das größtmögliche Verzögerungspotential des Nutzfahrzeugs 6 oder der Fahrzeugkombination 24 repräsentiert, wird ein Mindestabstand Aₘᵢₙ zu einem vorausfahrenden Fahrzeug bestimmt, welcher während der Fahrt beispielsweise im Platoon jedenfalls einzuhalten ist, um ein Auffahren sicher zu vermeiden.

### Bezugszeichenliste (Bestandteil der Beschreibung)

1. Erste Bremseneinheit
2. Zweite Bremseneinheit
3. Dritte Bremseneinheit
4. Vierte Bremseneinheit
5. Bremsanlage
6. Nutzfahrzeug
7. Achse
8. Achse
9. Rad
10. Radbremse
11. Erster Bremskreis
12. Zweiter Bremskreis
13. Achsmodulator
14. Achsmodulator
15. Signalleitung
16. Bremssteuereinheit
17. Signalleitung
18. Drehzahlsensor
19. Elektrische Leitung
20. Verzögerungsanforderung
21. Bremssignalgeber
22. Bremspedal
23. Beschleunigungssensor
24. Fahrzeugkombination
25. Anhängefahrzeug
26. Bremskraftverteilung
27. Teilbremsung
28. Auswahl
29. Ausgewählte Bremseneinheit
30. Wertetabelle
31.Summe
32. Wertetabelle
33. Zuordnung
34. Gewichtung
35. Vergleich
36. Zubremssignal
37. Konzentration
38. Steuerleitung
39. Überschreiten
40. Gewichtungspfad
41. Betätigungssystem (pneumatisch)
42. Bremszylinder
43. Bremshebel
44. Erster Druckmittelvorrat
45. Zweiter Druckmittelvorrat
46. Betätigungssystem (hydraulisch)
47. Hydraulikleitung
48. Hydraulikzylinder
49. Betätigungssystem (elektromechanisch)
50. Elektromechanischer Aktor
51. Elektrische Steuerleitung
52. Bestimmung
b Verzögerung
λ Radschlupf
λ_{Gr} Radschlupfgrenze
b₁, b₂, b₃, b₄ Teilverzögerungswert
b₁ₘₐₓ, b₂ₘₐₓ, b₃ₘₐₓ, b₄ₘₐₓ maximaler Teilverzögerungswert
bₘᵢₙ minimaler Gesamtverzögerungswert
bₘₐₓ maximaler Gesamtverzögerungswert
Δ_{λ} Schlupfdifferenz
F₁, F₂, F₃, F₄ Bremskraft
F_{A} Ansprechkraft
F_{Ges} Gesamtbremskraft
A Abstand
Aₘᵢₙ Mindestabstand

## Patentansprüche

1. Verfahren zur Bestimmung der durch Betätigung von Radbremsen (10) erreichbaren Gesamtverzögerungswerte (bₘₐₓ, bₘᵢₙ) eines Nutzfahrzeugs (6) oder einer Fahrzeugkombination (24) mit mehreren Achsen (7, 8) wobei zur Umsetzung einer Verzögerungsanforderung (20) bei Teilbremsungen (27) eine Bremskraftverteilung (26) mit ungleich auf Bremseneinheiten (1, 2, 3, 4), mit den Radbremsen (10) einer oder mehrerer Achsen (7, 8) verteilten Bremskräften (F₁, F₂, F₃, F₄) erfolgt, wobei jeweils eine der Bremseneinheiten (1, 2, 3, 4) ausgewählt wird und über diese ausgewählte Bremseneinheit (29) eine größere Bremskraft (F₂) aufgebracht wird als über die anderen Bremseneinheiten (1, 2, 4), wobei eine aktuelle Verzögerung (b) des Nutzfahrzeugs (6) oder der Fahrzeugkombination (24) gemessen oder ermittelt wird und als Teilverzögerungswert (b₁, b₂, b₃, b_{4,} b_{1max,} b_{2max,} b_{3max,} b₄ₘₐₓ) der jeweils ausgewählten Bremseneinheit (29) zugeordnet und abgespeichert wird, und die erreichbaren Gesamtverzögerungswerte (bₘₐₓ, bₘᵢₙ) als Summe (31) der Teilverzögerungswerte (b₁, b₂, b₃, b₄, b_{1max,} b_{2max,} b_{3max,} b₄ₘₐₓ) sämtlicher Bremseneinheiten (1, 2, 3, 4) bestimmt wird,
**dadurch gekennzeichnet, dass**:
das Verfahren für ein Nutzfahrzeug (6) oder eine Fahrzeugkombination (24) mit mehreren Achsen (7, 8) ist;
zur Bestimmung von Teilverzögerungswerten (b₁, b₂, b₃, b₄, b₁ₘₐₓ, b₂ₘₐₓ, b₃ₘₐₓ, b₄ₘₐₓ) einer ausgewählten Bremseneinheit (29) eine angeforderte Gesamtbremskraft (F_{Ges}) des Nutzfahrzeugs (6) oder der Fahrzeugkombination (24) entsprechend der Verzögerungsanforderung (20) bei der Bremskraftverteilung (26) auf die jeweils ausgewählte Bremseneinheit (29) konzentriert (37) wird; und
während der Konzentration (37) der angeforderten Gesamtbremskraft (F_{Ges}) auf eine ausgewählte Bremseneinheit (29) die weiteren Bremseneinheiten (1, 2, 3, 4) nicht oder mit einer Ansprechkraft (F_{A}) betätigt werden.

2. Verfahren nach einem der vorhergehenden Ansprüche,
**dadurch gekennzeichnet, dass**
ein maximaler Teilverzögerungswert (b_{1max,} b_{2max,} b_{3max,} b₄ₘₐₓ) bestimmt wird, indem ein jeweiliger Radschlupf (λ) an den Radbremsen (10) der ausgewählten Bremseneinheit (29) erfasst und mit einer vorgegebenen Radschlupfgrenze (λ_{Gr}) verglichen wird, und bei Erreichen oder Überschreiten (39) der Radschlupfgrenze (λ_{Gr}) die aktuelle Verzögerung (b) des Nutzfahrzeugs (6) oder der Fahrzeugkombination (24) als maximaler Teilverzögerungswert (b₁ₘₐₓ, b₂ₘₐₓ, b₃ₘₐₓ, b₄ₘₐₓ) abgespeichert wird und ein maximaler Gesamtverzögerungswert (bₘₐₓ) als Summe (31) der maximalen Teilverzögerungswerte (b₁ₘₐₓ, b₂ₘₐₓ, b₃ₘₐₓ, b₄ₘₐₓ) der Bremseneinheiten (1, 2, 3, 4) bestimmt wird.

3. Verfahren nach Anspruch 1 oder 2,
**dadurch gekennzeichnet, dass**
ein maximaler Teilverzögerungswert (b₁ₘₐₓ, b₂ₘₐₓ, b₃ₘₐₓ, b₄ₘₐₓ) der jeweiligen Bremseneinheiten (1, 2, 3, 4) bestimmt wird, indem die aktuelle Verzögerung (b) des Nutzfahrzeugs (6) oder der Fahrzeugkombination (24) entsprechend des erfassten Radschlupfs (λ) gewichtet wird.

4. Verfahren nach einem der vorhergehenden Ansprüche,
**dadurch gekennzeichnet, dass**
die Bremseneinheiten (1, 2, 3, 4) nacheinander zur Umsetzung der größten Bremskraft (F₂) bei Teilbremsungen (27) ausgewählt werden und jeweils ein Teilverzögerungswert (b₁, b₂, b₃, b₄) und/oder ein maximaler Teilverzögerungswert (b₁ₘₐₓ, b₂ₘₐₓ, b₃ₘₐₓ, b₄ₘₐₓ) zugeordnet wird.

5. Verfahren nach einem der vorhergehenden Ansprüche,
**dadurch gekennzeichnet, dass**
unter Berücksichtigung der Gesamtverzögerungswerte (bₘₐₓ, bₘᵢₙ) ein Abstand (A, Aₘᵢₙ) eines Nutzfahrzeugs (6) oder einer Fahrzeugkombination (24) zu einem vorausfahrenden Fahrzeug bestimmt wird.

6. Bremsanlage (5) zur Durchführung des Verfahrens nach einem der Ansprüche 1 bis 5, mit pro Rad (9) eines Nutzfahrzeugs (6) oder einer Fahrzeugkombination (24) einer Radbremse (10), mit einer elektronischen Bremssteuereinheit (16) zur Bremskraftverteilung (26) von Bremskräften (F₁, F₂, F₃, F₄) auf Bremseneinheiten (1, 2, 3, 4) bestehend jeweils aus den Radbremsen (10) mindestens einer Achse (7, 8), sowie wenigstens einem der Bremssteuereinheit (16) zur Ermittlung der aktuellen Verzögerung (b) des Nutzfahrzeugs (6) oder der Fahrzeugkombination (24) zugeordneten Sensor (23), wobei die Bremssteuereinheit (16) dazu ausgebildet ist, bei Teilbremsungen (27) Bremskräfte (F₁, F₂, F₃, F₄) zur Umsetzung einer Verzögerungsanforderung (20) ungleich auf die Bremseneinheiten (1, 2, 3, 4) zu verteilen, eine der Bremseneinheiten (1, 2, 3, 4) zur Umsetzung einer größeren Bremskraft (F₂) als die anderen Bremseneinheiten (1, 2, 3, 4) auszuwählen, die aktuelle Verzögerung (b) als Teilverzögerungswert (b₁, b₂, b₃, b₄, b₁ₘₐₓ, b₂ₘₐₓ, b₃ₘₐₓ, b₄ₘₐₓ) der jeweils ausgewählten Bremseneinheit (29) zuzuordnen und die erreichbaren Gesamtverzögerungswerte (bₘₐₓ, bₘᵢₙ) als Summe (31) der Teilverzögerungswerte (b₁, b₂, b₃, b₄, b₁ₘₐₓ, b₂ₘₐₓ, b₃ₘₐₓ, b₄ₘₐₓ) sämtlicher Bremseneinheiten (1, 2, 3, 4) zu bestimmen.

7. Nutzfahrzeug (6) oder Fahrzeugkombination (24) mit einer Bremsanlage (5) nach Anspruch 8 zur Durchführung des Verfahrens nach einem der Ansprüche 1 bis 5.

## Claims

1. Method for determining the total deceleration values (bₘₐₓ, bₘᵢₙ), which can be achieved by actuating wheel brakes (10), of a utility vehicle (6) or a vehicle combination (24) having a plurality of axles (7, 8), a braking force distribution (26) having braking forces (F₁, F₂, F₃, F₄) unequally distributed to the brake units (1, 2, 3, 4) by means of the wheel brakes (10) of one or more axles (7, 8) taking place in order to implement a deceleration request (20) during partial braking operations (27), in each case one of the brake units (1, 2, 3, 4) being selected and a greater braking force (F₂) being applied via this selected brake unit (29) than via the other brake units (1, 2, 4), a current deceleration (b) of the utility vehicle (6) or of the vehicle combination (24) being measured or determined and being stored and assigned to the brake unit (29) selected in each case as a partial deceleration value (b₁, b₂, b₃, b₄, b₁ₘₐₓ, b₂ₘₐₓ, b₃ₘₐₓ, b₄ₘₐₓ), and the achievable total deceleration values (bₘₐₓ, bₘᵢₙ) being determined as the sum (31) of the partial deceleration values (b₁, b₂, b₃, b₄, b₁ₘₐₓ, b₂ₘₐₓ, b₃ₘₐₓ, b₄ₘₐₓ) of all the brake units (1, 2, 3, 4),
**characterized in that:**
the method is for a utility vehicle (6) or a vehicle combination (24) having a plurality of axles (7, 8);
for determining partial deceleration values (b₁, b₂, b₃, b₄, b₁ₘₐₓ, b₂ₘₐₓ, b₃ₘₐₓ, b₄ₘₐₓ) of a selected brake unit (29), a requested total braking force (F_{Ges}) of the utility vehicle (6) or the vehicle combination (24) is concentrated on the selected brake unit (29) selected in each case according to the deceleration request (20) during the braking force distribution (26); and
during the concentration (37) of the requested total braking force (F_{Ges}) on a selected brake unit (29), the further brake units (1, 2, 3, 4) are not actuated or are actuated with a response force (F_{A}).

2. Method according to any of the preceding claims,
**characterized in that**
a maximum partial deceleration value (b₁ₘₐₓ, b₂ₘₐₓ, b₃ₘₐₓ, b₄ₘₐₓ) is determined
by detecting a relevant wheel slip (A) at the wheel brakes (10) of the selected brake unit (29) and the wheel slip being compared with a predetermined wheel slip limit (λ_{Gr}), and when the wheel slip limit (λ_{Gr}) is reached or exceeded (39), the current deceleration (b) of the utility vehicle (6) or the vehicle combination (24) is stored as a maximum partial deceleration value (b₁ₘₐₓ, b₂ₘₐₓ, b₃ₘₐₓ, b₄ₘₐₓ) and a maximum total deceleration value (bₘₐₓ) is determined as the sum (31) of the maximum partial deceleration values (b₁ₘₐₓ, b₂ₘₐₓ, b₃ₘₐₓ, b₄ₘₐₓ) of the brake units (1, 2, 3, 4).

3. Method according to claim 1 or 2,
**characterized in that**
maximum partial deceleration value (b₁ₘₐₓ, b₂ₘₐₓ, b₃ₘₐₓ, b₄ₘₐₓ) of the relevant brake units (1, 2, 3, 4) is determined by weighting the current deceleration (b) of the utility vehicle (6) or the vehicle combination (24) according to the detected wheel slip (λ).

4. Method according to any of the preceding claims,
**characterized in that**
the brake units (1, 2, 3, 4) are selected successively for implementing the highest braking force (F₂) during partial braking operations (27) and a partial deceleration value (b₁, b₂, b₃, b₄) and/or a maximum partial deceleration value (b₁ₘₐₓ, b₂ₘₐₓ, b₃ₘₐₓ, b_{4 max}) is assigned in each case.

5. Method according to any of the preceding claims,
**characterized in that,**
taking into account the total deceleration values (bₘₐₓ, bₘᵢₙ), a distance (A, Aₘᵢₙ) between a utility vehicle (6) or a vehicle combination (24) and a vehicle traveling in front is determined.

6. Brake system (5) for carrying out the method according to any of claims 1 to 5, comprising one wheel brake (10) for each wheel (9) of a utility vehicle (6) or a vehicle combination (24), comprising an electronic brake control unit (16) for the braking force distribution (26) of braking forces (F₁, F₂, F₃, F₄) to brake units (1, 2, 3, 4) consisting in each case of the wheel brakes (10) of at least one axle (7, 8), and at least one sensor (23) associated with the brake control unit (16) for determining the current deceleration (b) of the utility vehicle (6) or the vehicle combination (24), wherein the brake control unit (16) is designed, during partial braking operations(27), to distribute brake forces F₁, F₂, F₃, F₄) unequally to the brake units (1, 2, 3, 4) in order to implement a deceleration request (20), to select one of the brake units (1,2, 3, 4) in order to implement a greater braking force (F₂) than the other brake units (1,2, 3, 4), to assign the current deceleration (b) as a partial deceleration value (b₁, b₂, b₃, b₄, b₁ₘₐₓ, b₂ₘₐₓ, b₃ₘₐₓ, b₄ₘₐₓ) to the brake unit (29) selected in each case, and to determine the achievable total deceleration values (bₘₐₓ, bₘᵢₙ) as the sum (31) of the partial deceleration values (b₁, b₂, b₃, b₄, b₁ₘₐₓ, b₂ₘₐₓ, b₃ₘₐₓ, b₄ₘₐₓ) of all of the brake units (1,2, 3, 4).

7. Utility vehicle (6) or vehicle combination (24) comprising a brake system (5) according to claim 8 for carrying out the method according to any of claims 1 to 5.

## Revendications

1. Procédé permettant de déterminer les valeurs de décélération totale (bₘₐₓ, bₘᵢₙ), pouvant être atteintes par l'actionnement de freins de roue (10), d'un véhicule utilitaire (6) ou d'une combinaison de véhicules (24) comportant plusieurs essieux (7, 8), dans lequel, pour la conversion d'une demande de décélération (20) lors de freinages partiels (27), une répartition de la force de freinage (26) est effectuée par des forces de freinage (F₁, F₂, F₃, F₄) réparties de manière irrégulière sur des unités de freinage (1, 2, 3, 4) à l'aide des freins de roue (10) d'un ou de plusieurs essieux (7, 8), respectivement l'une des unités de freinage (1, 2, 3, 4) étant choisie et une force de freinage (F₂) étant appliquée par l'intermédiaire de ladite unité de freinage choisie (29) et étant supérieure à celle appliquée par l'intermédiaire des autres unités de freinage (1, 2, 4), une décélération actuelle (b) du véhicule utilitaire (6) ou de la combinaison de véhicules (24) étant mesurée ou déterminée et associée et enregistrée comme valeur de décélération partielle (b₁, b₂, b₃, b₄, b₁ₘₐₓ, b₂ₘₐₓ, b₃ₘₐₓ, b₄ₘₐₓ) de l'unité de freinage respectivement choisie (29), et les valeurs de décélération totale (bₘₐₓ, bₘᵢₙ) pouvant être atteintes étant déterminées comme somme (31) des valeurs de décélération partielle (b₁, b₂, b₃, b₄, b₁ₘₐₓ, b₂ₘₐₓ, b₃ₘₐₓ, b₄ₘₐₓ) de l'ensemble des unités de freinage (1, 2, 3, 4),
**caractérisé en ce que** :
le procédé est destiné à un véhicule utilitaire (6) ou une combinaison de véhicules (24) comportant plusieurs essieux (7, 8) ;
pour la détermination de valeurs de décélération partielle (b₁, b₂, b₃, b₄, b₁ₘₐₓ, b₂ₘₐₓ, b₃ₘₐₓ, b₄ₘₐₓ) d'une unité de freinage choisie (29), une force de freinage total demandée (F_{Ges}) du véhicule utilitaire (6) ou de la combinaison de véhicules (24) est concentrée (37), conformément à la demande de décélération (20), lors de la répartition de la force de freinage (26), sur l'unité de freinage respectivement choisie (29) ; et
pendant la concentration (37) de la force de freinage total demandée (F_{Ges}) sur une unité de freinage choisie (29), les autres unités de freinage (1, 2, 3, 4) ne sont pas actionnées ou sont actionnées par une force de réponse (F_{A}).

2. Procédé selon l'une quelconque des revendications précédentes,
**caractérisé en ce que**
une valeur de décélération partielle maximale (b₁ₘₐₓ, b₂ₘₐₓ, b₃ₘₐₓ, b₄ₘₐₓ) est déterminée
en définissant un patinage (λ) respectif au niveau des freins de roue (10) de l'unité de freinage choisie (29) et en le comparant à une limite de patinage (λ_{Gr}) spécifiée et, lorsque la limite de patinage (λ_{Gr}) est atteinte ou dépassée (39), en enregistrant la décélération actuelle (b) du véhicule utilitaire (6) ou de la combinaison de véhicules (24) comme valeur de décélération partielle maximale (b₁ₘₐₓ, b₂ₘₐₓ, b₃ₘₐₓ, b₄ₘₐₓ) et en déterminant une valeur de décélération totale maximale (bₘₐₓ) comme somme (31) des valeurs de décélération partielle maximales (b₁ₘₐₓ, b₂ₘₐₓ, b₃ₘₐₓ, b₄ₘₐₓ) des unités de freinage (1, 2, 3, 4).

3. Procédé selon la revendication 1 ou 2,
**caractérisé en ce que**
une valeur de décélération partielle maximale (b₁ₘₐₓ, b₂ₘₐₓ, b₃ₘₐₓ, b₄ₘₐₓ) des unités de freinage (1, 2, 3, 4) respectives est définie en pondérant la décélération actuelle (b) du véhicule utilitaire (6) ou de la combinaison de véhicules (24) conformément au patinage (λ) détecté.

4. Procédé selon l'une quelconque des revendications précédentes,
**caractérisé en ce que**
les unités de freinage (1, 2, 3, 4) sont choisies de manière séquentielle pour la conversion de la force de freinage (F₂) la plus grande lors de freinages partiels (27) et respectivement une valeur de décélération partielle (b₁, b₂, b₃, b₄) et/ou une valeur de décélération partielle maximale (b₁ₘₐₓ, b₂ₘₐₓ, b₃ₘₐₓ, b₄ₘₐₓ) y est associée.

5. Procédé selon l'une quelconque des revendications précédentes,
**caractérisé en ce que**
en tenant compte des valeurs de décélération totale (bₘₐₓ, bₘᵢₙ), une distance (A, Aₘᵢₙ) entre un véhicule utilitaire (6) ou une combinaison de véhicules (24) et un véhicule qui précède est déterminée.

6. Système de freinage (5) permettant de réaliser le procédé selon l'une des revendications 1 à 5, comportant, par roue (9) d'un véhicule utilitaire (6) ou d'une combinaison de véhicules (24), un frein de roue (10), comportant une unité de commande de freinage (16) électronique destinée à la répartition de force de freinage (26) de forces de freinage (F₁, F₂, F₃, F₄) sur des unités de freinage (1, 2, 3, 4) constituées respectivement des freins de roue (10) d'au moins un essieu (7, 8), ainsi qu'au moins un capteur (23) associé à l'unité de commande de freinage (16) et destiné à déterminer la décélération actuelle (b) du véhicule utilitaire (6) ou de la combinaison de véhicules (24), l'unité de commande de freinage (16) étant configurée pour répartir, lors de freinages partiels (27), des forces de freinage (F₁, F₂, F₃, F₄) pour la conversion d'une demande de décélération (20) de manière irrégulière sur les unités de freinage (1, 2, 3, 4), pour choisir l'une des unités de freinage (1, 2, 3, 4) pour la conversion d'une force de freinage (F₂) supérieure à celle des autres unités de freinage (1, 2, 3, 4), pour associer la décélération actuelle (b) comme valeur de décélération partielle (b₁, b₂, b₃, b₄, b₁ₘₐₓ, b₂ₘₐₓ, b₃ₘₐₓ, b₄ₘₐₓ) de l'unité de freinage respectivement choisie (29) et pour déterminer les valeurs de décélération totale (bₘₐₓ, bₘᵢₙ) pouvant être atteintes comme somme (31) des valeurs de décélération partielle (b₁, b₂, b₃, b₄, b₁ₘₐₓ, b₂ₘₐₓ, b₃ₘₐₓ, b₄ₘₐₓ) de l'ensemble des unités de freinage (1, 2, 3, 4).

7. Véhicule utilitaire (6) ou combinaison de véhicules (24) comportant un système de freinage (5) selon la revendication 8 pour la mise en oeuvre du procédé selon l'une des revendications 1 à 5.
